(19) Europäisches Patentamt — European Patent Office — Office européen des brevets

(11) **EP 4 750 014 A1**

(12) **DEMANDE DE BREVET EUROPEEN**

(43) Date de publication:
**27.05.2026 Bulletin 2026/22**

(21) Numéro de dépôt: **25216511.3**

(22) Date de dépôt: **18.11.2025**

(51) Classification Internationale des Brevets (IPC):
*H04L 41/0631* (2022.01)     *H04L 41/16* (2022.01)
*H04L 41/0604* (2022.01)

(52) Classification Coopérative des Brevets (CPC):
**H04L 41/0631; H04L 41/16;** H04L 41/0609

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.11.2024 FR 2412679**

(71) Demandeur: **Orange**
**92130 Issy-les-Moulineaux (FR)**

(72) Inventeurs:
• **TRIKI, Ahmed**
  **92326 CHATILLON CEDEX (FR)**
• **LAYE, Maxime**
  **92326 CHATILLON CEDEX (FR)**
• **MACAHDO CARNEIRO, Bruno**
  **92326 CHATILLON CEDEX (FR)**

(74) Mandataire: **Cabinet Beau de Loménie**
**103, rue de Grenelle / CS 90800**
**75340 Paris Cedex 07 (FR)**

(54) **PROCEDE ET SYSTEME DE TRAITEMENT D'AU MOINS UN ENSEMBLE D'ALARMES EMISES DANS UN RESEAU DE COMMUNICATION**

(57)     L'invention concerne un procédé de traitement d'au moins un ensemble d'alarmes émises dans un réseau de communication, chaque alarme comportant au moins une donnée d'attribut distincte d'une donnée temporelle, ledit procédé comportant, pour chaque ensemble d'alarmes, une phase dite de « classification » comprenant des étapes mises en œuvre par un modèle d'apprentissage automatique entrainé, dit « modèle IA », dont :
- détermination (S10), pour chaque alarme et par un module d'encodage du modèle IA, d'une première représentation vectorielle encodant ladite au moins une donnée d'attribut,
- détermination (S20), à partir des premières représentations vectorielles et par un transformeur-encodeur du modèle IA, d'au moins une donnée de sortie,
- détermination (S30), à partir de ladite au moins une donnée de sortie et par une tête de classification du modèle IA, d'un résultat de classification dudit ensemble d'alarmes.

[Fig. 3]

**Description**

Technique antérieure

La présente invention appartient au domaine général du diagnostic et de la maintenance de réseaux de communication. Elle concerne plus particulièrement un procédé de traitement d'au moins un ensemble d'alarmes émises dans un réseau de communication, ainsi qu'un système de traitement configuré pour mettre en œuvre ledit procédé. L'invention trouve une application particulièrement avantageuse, bien que nullement limitative, dans le contexte d'un réseau de communication optique.

L'analyse des alarmes émises dans un réseau de communication joue un rôle clé dans la gestion (i.e. détection, diagnostic, maintenance) des pannes de ce réseau. Cette analyse est traditionnellement réalisée à partir d'alarmes émises pendant une durée déterminée et une fois que celles-ci ont été remontées vers un système de gestion de réseau « NMS » (acronyme de l'expression anglaise « Network Management System »).

De manière conventionnelle, une alarme correspond à un signal (ou encore une notification ou un message destiné à être mémorisé dans un registre sous la forme d'un fichier de données, dit « log ») émis par une entité appartenant à un réseau de communication. Une telle entité comporte typiquement des moyens matériels et/ou logiciels pour mettre en œuvre une fonctionnalité au sein dudit réseau, étant entendu qu'en cas de panne (i.e. un problème de fonctionnement), ladite fonctionnalité ne peut plus être mise en œuvre.

En particulier, une alarme peut comporter une ou plusieurs données d'attributs (i.e. une ou plusieurs données propres à ladite alarme), réparties dans autant de champs de l'alarme, comme par exemple :

- un type de l'alarme, qui informe sur la nature de la panne. Ce champ apparaît généralement sous forme d'une chaîne de caractères ou code alphanumérique. Une liste restreinte de types d'alarmes possibles est fournie par chaque équipementier réseaux,
- un indicateur représentatif d'un niveau de sévérité de l'alarme (par exemple critique, majeure, mineure, avertissement, etc.),
- un type d'une entité du réseau de communication ayant émis l'alarme (par exemple un équipement matériel, un port logique ou physique, etc.),
- un identifiant d'une entité du réseau de communication ayant émis l'alarme,
- un indicateur représentatif de la couche réseau à partir de laquelle l'alarme a été émise,
- une donnée temporelle (par exemple un horodatage indiquant la date et l'heure d'émission de l'alarme par une entité du réseau, un horodatage indiquant la date et l'heure de réception de l'alarme par un système NMS, une durée de transmission d'une alarme depuis une entité émettrice vers un système NMS, etc.).

Dans la mesure où les réseaux de communication actuels ne cessent de s'étendre, il est devenu de plus en plus difficile d'analyser les pannes impactant les services, les fonctionnalités et les équipements attachés à ces réseaux. En effet, plus les réseaux s'étendent, plus le nombre d'alarmes générées en cas de pannes augmente, ce qui complexifie d'autant la gestion des pannes, et plus spécifiquement la tâche de diagnostic qui comprend notamment l'identification d'une panne/alarme à l'origine d'éventuelles autres pannes/alarmes (encore appelée « cause racine »).

Cette problématique est en outre renforcée par le fait que certaines alarmes peuvent être redondantes et/ou liées à une même cause racine. Il est également possible d'avoir de fausses alarmes, ou des alarmes sans importance.

Une manière au moins théorique de surmonter cette problématique est d'effectuer des traitements spécifiques à partir des alarmes remontées vers un système NMS. Ces traitements consistent à regrouper les alarmes en différents clusters de sorte que les alarmes contenues dans un même cluster sont « similaires » au sens où elles ont toutes été déclenchées par la même cause racine (l'alarme associée à la cause racine étant également contenue dans le cluster).

En pratique, ces traitements de clustering ont d'abord été effectués de manière manuelle par des experts sur la base de leurs connaissances métier. Cette manière de procéder est néanmoins très coûteuse en temps et fastidieuse, et tend désormais à être remplacée par des méthodes automatisées.

Certaines méthodes automatisées consistent à transformer les connaissances des experts en règles métier implémentées de manière logicielle. Ces méthodes n'en restent pas moins déficientes en ce que les mises à jour régulières des règles métier, notamment pour des raisons d'adaptation aux différentes évolutions du réseau (déploiement de nouveaux équipements, déploiement de nouveaux services, etc.), nécessitent également un investissement conséquent en temps et en ressources.

D'autres méthodes automatisées plus récentes mettent en œuvre des techniques statistiques ou d'intelligence artificielle, notamment d'apprentissage automatisé (« machine learning » en anglais), qui s'appuient de manière essentielle sur les données temporelles contenues dans les alarmes ainsi que sur l'hypothèse selon laquelle il existe une synchronisation temporelle parfaite entre les entités du réseau susceptibles d'émettre des alarmes. Or, d'une part, une telle hypothèse ne peut être garantie, et, d'autre part, elle peut conduire à la formation de clusters invalides lorsqu'elle est mise en défaut.

Par « cluster invalide », on fait référence dans la présente description à un cluster comportant au moins une alarme intruse (i.e. une alarme dont la cause racine est distincte de celle associée aux autres alarmes du cluster) et/ou dans lequel il manque au moins une alarme attendue (i.e. une alarme dont la cause racine est identique à celle associée aux autres alarmes du cluster).

En effet, et à titre d'exemples nullement limitatifs, un tel défaut de synchronisation peut avoir un impact direct sur le traitement d'alarmes liées à des causes racines distinctes et associées à des pannes se produisant simultanément ou remontées au système NMS sur une durée longue (risque de superposition temporelle partielle ou totale entre clusters), ou sur le traitement d'alarmes dont les émissions sont éloignées temporellement par rapport aux autres alarmes liées à la même cause racine (risque de génération de clusters dissociés alors qu'ils ne devraient former qu'un seul et même cluster).

Exposé de l'invention

La présente invention a pour objectif de remédier à tout ou partie des inconvénients de l'art antérieur, notamment ceux exposés ci-avant, en proposant une solution qui permette de classifier les alarmes émises dans un réseau de communication de sorte à pouvoir obtenir des clusters valides de manière automatisée et plus efficace que les solutions de l'état de la technique.

A cet effet, et selon un premier aspect, l'invention concerne un procédé de traitement d'au moins un ensemble d'alarmes émises dans un réseau de communication, chaque alarme comportant au moins une donnée d'attribut distincte d'une donnée temporelle, ledit procédé comportant, pour chaque ensemble d'alarmes, une phase dite de « classification » comprenant des étapes mises en œuvre par un modèle d'apprentissage automatique entrainé, dit « modèle IA », dont :

- détermination, pour chaque alarme dudit au moins un ensemble d'alarmes, et par un module d'encodage du modèle IA, d'une première représentation vectorielle encodant ladite au moins une donnée d'attribut, de manière à obtenir un ensemble de premières représentations vectorielles
- détermination, à partir dudit ensemble de premières représentations vectorielles et par un transformeur-encodeur du modèle IA, d'au moins une deuxième représentation vectorielle pour chaque première représentation vectorielle ,
- détermination, à partir de ladite au moins une deuxième représentation vectorielle et par une tête de classification du modèle IA, d'un résultat de classification dudit ensemble d'alarmes.

Ainsi, le procédé de traitement selon l'invention tire parti, via le modèle IA, des données d'attributs pour aboutir à une classification automatisée des alarmes. Cette manière de procéder est particulièrement avantageuse en comparaison avec les solutions de l'état de la technique en ce que ces données d'attributs sont caractéristiques desdites alarmes tout en étant distinctes de données temporelles.

Il résulte de ces considérations que les alarmes sont considérées comme des unités d'information (encore appelées « jetons » ou « tokens » selon la terminologie usuelle) entre lesquelles il est possible d'établir des corrélations au travers de l'exploitation des données d'attributs par le modèle IA.

A cet effet, le modèle IA s'inspire de modèles utilisés dans le traitement automatisé du langage naturel (« Natural Language Processing » ou « NLP » en anglais), comme typiquement le modèle BERT (acronyme de l'expression anglaise « Bidirectional Encoder Representations from Transformers »), de sorte à pouvoir créer des liens « sémantiques » entre les alarmes contenues dans ledit au moins un ensemble d'alarmes.

Il importe de noter que le terme « sémantiques », pour ce qui concerne les liens entre alarmes, dérive de la terminologie usuelle employée lors de l'utilisation de modèles NLP. En ce sens, et bien que les unités d'information que sont les alarmes ne correspondent pas à un langage parlé par des humains, elles peuvent néanmoins être vues comme des « mots » interprétés et analysés par le modèle IA pour en tirer des liens sémantiques (i.e. des corrélations). L'ensemble des mots possibles constitue un vocabulaire représentatif des alarmes pouvant être émises dans le réseau de communication, et dont la richesse découle des données d'attributs qui leur sont associées. Il résulte en outre de ceci que, si l'on considère un cluster valide, les alarmes qui y sont regroupées forment une « phrase » (i.e. une réunion de mots) qui a un sens au regard de ladite sémantique.

Dans la mesure où aucune donnée temporelle n'est prise en compte par le modèle IA, la sémantique du vocabulaire formé par les alarmes ne dépend pas de telles données temporelles, mais repose exclusivement sur les données d'attributs. Comme déjà mentionné ci-avant, il s'agit là d'une différence fondamentale avec les méthodes de l'état de la technique qui, dans l'optique d'un regroupement d'alarmes en clusters, s'appuient de manière essentielle sur ce type de données temporelles pour classer les alarmes.

Dans des modes particuliers de mise en œuvre, le procédé de traitement peut comporter en outre l'une ou plusieurs des caractéristiques suivantes, prises isolément ou selon toutes les combinaisons techniquement possibles.

Dans des modes particuliers de mise en œuvre, ladite au moins une donnée d'attribut comporte une ou plusieurs données d'attributs parmi :

- un type de l'alarme,
- un indicateur représentatif d'un niveau de sévérité de l'alarme,
- un type d'une entité réseau de communication ayant émis l'alarme,
- un identifiant d'une entité du réseau de communication ayant émis l'alarme,

- un indicateur représentatif de la couche réseau à partir de laquelle l'alarme a été émise.

Dans des modes particuliers de mise en œuvre :

- ledit au moins un ensemble d'alarmes comporte une pluralité d'ensembles d'alarmes, chaque ensemble d'alarmes correspondant à un cluster ayant été généré préalablement à la mise en œuvre du procédé à partir d'un sur-ensemble d'alarmes émises dans au moins une partie du réseau de communication pendant une durée déterminée, et chaque cluster étant associé à une alarme correspondant à un évènement dans le réseau de communication à l'origine de l'émission des alarmes dudit cluster, et
- le résultat de classification correspond à une indication de validité ou d'absence de validité dudit cluster, laquelle est déterminée par la mise en œuvre de la phase de classification pour chaque cluster, l'absence de validité étant définie par une présence dans ledit cluster d'au moins une alarme intruse, et/ou une absence dans ledit cluster d'au moins une alarme attendue.

Dans des modes particuliers de mise en œuvre, ladite indication de validité ou d'absence de validité dudit cluster est un résultat de classification binaire.

Dans des modes particuliers de mise en œuvre, la détermination du résultat de classification comporte une identification d'au moins une alarme intruse dans ledit cluster.

Dans des modes particuliers de mise en œuvre, ledit procédé comporte en outre, si au moins une alarme intruse a été détectée dans chacun parmi une pluralité de clusters, une phase dite de « correction » comprenant des étapes de :

- mise à jour des clusters invalides par remplacement, dans chaque cluster invalide, d'au moins une alarme intruse identifiée dans ledit cluster invalide par au moins une autre alarme intruse identifiée dans un autre cluster invalide,
- exécution, par le modèle IA, de la phase de classification pour chacun des clusters mis à jour,

ladite phase de correction étant itérée jusqu'à qu'un critère d'arrêt soit satisfait.

Dans des modes particuliers de mise en œuvre, le modèle IA a été entrainé au moyen d'une technique d'apprentissage par langage masqué.

Dans des modes particuliers de mise en œuvre :

- ledit au moins un ensemble d'alarmes est constitué d'un unique ensemble d'alarmes correspondant à des alarmes émises dans au moins une partie du réseau de communication pendant une durée déterminée,
- ladite au moins une donnée de sortie du transformateur-encodeur comporte, pour chaque première représentation vectorielle, une deuxième représentation vectorielle contextualisée, et

- le modèle IA a été entrainé au moyen d'une technique d'apprentissage contrastif de sorte que le résultat de classification comporte, pour chaque deuxième représentation vectorielle, une troisième représentation vectorielle, lesdites troisièmes représentations vectorielles étant représentatives d'une similarité des alarmes dudit unique ensemble d'alarmes.

Dans des modes particuliers de mise en œuvre, ledit procédé comporte en outre une étape de regroupement des alarmes dudit unique ensemble d'alarmes dans des clusters à partir desdites troisièmes représentations vectorielles.

Dans des modes particuliers de mise en œuvre, ledit procédé comporte en outre :

- une fois la phase de correction achevée et pour chaque cluster mis à jour, une étape de détermination d'une alarme appartenant audit cluster et correspondant à un évènement dans le réseau de communication à l'origine de l'émission des autres alarmes dudit cluster ;
- une fois l'étape de regroupement achevée et pour chaque cluster, une étape de détermination d'une alarme correspondant à un évènement dans le réseau de communication à l'origine de l'émission des alarmes dudit cluster.

Dans des modes particuliers de mise en œuvre, le réseau de communication est un réseau de communication optique ou un réseau de type CAN déployé dans un véhicule de transport.

Selon un deuxième aspect, l'invention concerne un programme d'ordinateur comportant des instructions pour la mise en œuvre d'un procédé de traitement de données selon l'invention lorsque ledit programme d'ordinateur est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un troisième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un quatrième aspect, l'invention concerne un dispositif de traitement d'au moins un ensemble de messages d'alarme émis dans un réseau de communication, dit « ensemble d'alarmes », chaque message d'alarme comportant au moins une information caractéristique de l'alarme associée audit message d'alarme, ledit dispositif de traitement comportant des moyens configurés pour mettre en œuvre un procédé de traitement selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure représente schématiquement, dans son environnement, un mode particulier de réalisation d'un dispositif de traitement d'alarmes selon l'invention ;

[Fig. 2] la figure 2 représente schématiquement un exemple d'architecture matérielle du dispositif de traitement de la figure 1 ;

[Fig. 3] la figure 3 représente, sous forme d'ordinogramme, les principales étapes d'un procédé de traitement mises en œuvre par le dispositif de la figure 2 ;

[Fig. 4] la figure 4 représente schématiquement une configuration générale d'un modèle IA implémenté par le dispositif de traitement de la figure 1 pour exécuter le procédé de traitement de la figure 3 ;

[Fig. 5] la figure 5 représente, sous forme d'ordinogramme, un premier mode particulier du procédé de traitement de la figure 3 ;

[Fig. 6] la figure 6 représente schématiquement un exemple de configuration du modèle IA pour la mise en œuvre du premier mode particulier de la figure 5 ;

[Fig. 7] la figure 7 représente, sous forme d'ordinogramme, un deuxième mode particulier du procédé de traitement de la figure 3 ;

[Fig. 8] la figure 8 représente schématiquement un exemple de configuration du modèle IA pour la mise en œuvre du deuxième mode particulier de la figure 7 ;

[Fig. 9] la figure 9 représente, sous forme d'ordinogramme, un troisième mode particulier du procédé de traitement de la figure 3.

[Fig. 10] la figure 10 représente de manière schématique un exemple de regroupement de sept alarmes lors de la mise en œuvre du troisième mode particulier de la figure 9.

Description de modes de réalisation

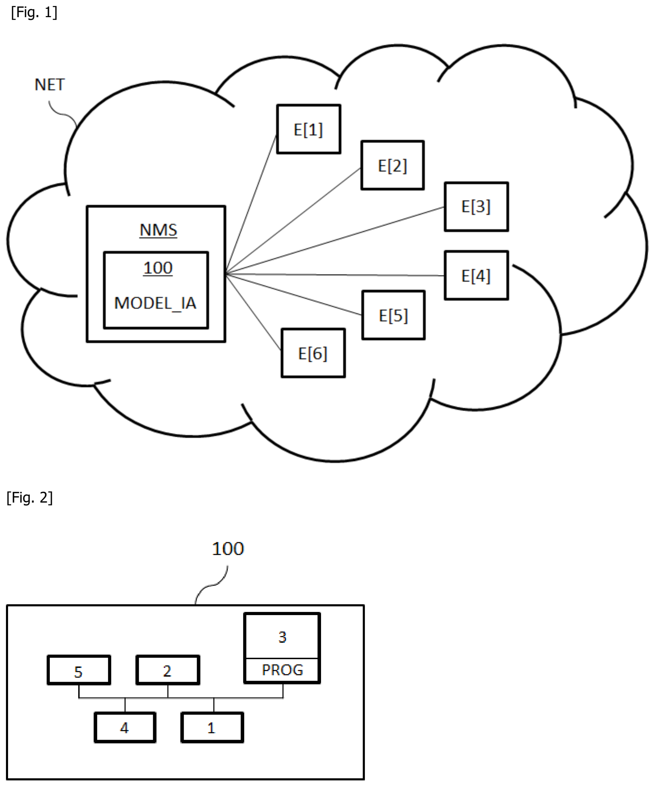

La figure 1 représente schématiquement, dans son environnement, un mode particulier de réalisation d'un dispositif 100 de traitement d'alarmes selon l'invention.

Tel qu'illustré par la figure 1, le dispositif 100 est intégré à un système de gestion de réseau « NMS » (acronyme de l'expression anglaise « Network Management System ») appartenant à un réseau NET.

Pour la suite de la description, on considère de manière nullement limitative que le réseau NET est un réseau de transport optique, les données échangées au sein du réseau NET l'étant au moyen du protocole « OTN » (acronyme de l'expression anglaise « Optical Transport Network »).

Le fait de considérer un réseau de transport optique ne constitue toutefois pas une limitation de l'invention, cette conclusion s'appliquant également à l'étendue de ce réseau. De manière générale, tout type de réseau dans lequel des alarmes peuvent être émises par des entités appartenant audit réseau peut être envisagé, dès lors que chacune desdites alarmes comporte au moins une donnée d'attribut distincte d'une donnée temporelle comme décrit en plus en détails ultérieurement. A titre illustratif, un réseau de type CAN (acronyme de l'expression anglaise « Control Area Network ») déployé dans un véhicule de transport, comme par exemple une voiture, peut être envisagé en alternative à un réseau de transport optique.

Le système de gestion NMS est notamment configuré pour réceptionner des alarmes émises par des entités dudit réseau NET. Les alarmes sont réceptionnées et mémorisées sous la forme de fichiers logs dans un registre, chaque fichier log comportant une pluralité de champs dans lesquels se trouvent des données d'attributs propres auxdites alarmes.

Chacune desdites entités est configurée de manière matérielle et/ou logicielle pour réaliser une fonction déterminée au sein du réseau NET (cette fonction dépendant notamment de l'appartenance de l'entité au plan de transport ou au plan de service ou au plan de contrôle du réseau NET), mais également pour émettre une alarme lorsqu'une panne (un incident) empêche la réalisation de cette fonctionnalité.

Dans le présent mode de réalisation où le réseau NET est un réseau de transport optique, une entité correspond par exemple à un émetteur-récepteur optique, un amplificateur optique, un filtre optique, un commutateur optique, un switch optique, à un port physique ou logiciel, une couche réseau, etc.

Dans l'exemple de la figure 1, six entités E[1],...,E[6] sont représentées à titre illustratif. Il apparaitra toutefois de manière évidente qu'aucune limitation n'est attachée au nombre d'entités pouvant appartenir au réseau NET.

Pour la suite de la description, on adopte également la notation A[i] (i étant un indice entier variant entre 1 et 6) pour désigner une alarme émise par l'entité E[i]. L'utilisation du seul indice « i » implique ici que, pour des raisons de simplification de la description, on considère l'émission d'une seule alarme A[i] par l'entité E[i]. On comprend toutefois que ces dispositions ne sont pas limitatives de l'invention, et que, bien entendu, chaque entité E[i] peut émettre une pluralité d'alarmes.

Comme mentionné ci-avant, chaque alarme A[i] émise dans le réseau NET comporte au moins une donnée d'attribut DATA_ATT[i,j] (j étant un indice entier compris entre 1 et 5) distincte d'une donnée temporelle, comme par exemple :

- DATA_ATT[i,1] : un type de l'alarme A[i], qui informe sur la nature de la panne. Ce champ apparaît généralement sous forme d'une chaîne de caractères ou code alphanumérique. Une liste restreinte de types d'alarmes possibles est fournie par chaque équipementier réseaux,
- DATA_ATT[i,2] : un indicateur représentatif d'un niveau de sévérité de l'alarme A[i] (par exemple critique, majeure, mineure, avertissement, etc.),
- DATA_ATT[i,3] : un type de l'entité E[i] ayant émis l'alarme A[i],
- DATA_ATT[i,4] : un identifiant de l'entité E[i] ayant émis l'alarme A[i],
- DATA_ATT[i,5] : un indicateur représentatif de la couche réseau à partir de laquelle l'alarme A[i] a été émise.

Aucune limitation n'est attachée au nombre de données d'attributs DATA_ATT[i,j] pouvant être envisagé pour chaque alarme A[i]. De manière préférée, chaque alarme A[i] comporte au moins une donnée d'attribut DATA_ATT[i,1] correspondant au type de l'alarme A[i], ainsi qu'éventuellement d'autres données d'attributs DATA_ATT[i,j] avec j différent de 1.

En pratique, chaque alarme A[i] comporte également une ou plusieurs données temporelles parmi la liste non limitative suivante :

- un horodatage indiquant la date et l'heure d'émission de l'alarme A[i] par l'entité E[i],
- un horodatage indiquant la date et l'heure de réception de l'alarme A[i] par le système NMS,
- une durée de transmission de l'alarme A[i] depuis l'entité E[i] vers le système NMS.

En tout état de cause, et avantageusement en comparaison avec l'état de la technique, de telles données temporelles ne sont pas utilisés pour mettre en œuvre la présente invention, comme expliqué en détails ultérieurement.

Il est à noter que le système NMS est décrit ici comme appartenant au réseau NET. Ces dispositions ne sont toutefois pas limitatives de l'invention, et rien n'exclut d'envisager que le système NMS soit situé dans un autre réseau, comme par exemple un réseau en nuage (« cloud » en anglais).

Suivant des considérations similaires, le fait de considérer que le dispositif 100 de traitement d'alarmes est intégré au système NMS ne constitue qu'une variante d'implémentation de l'invention. En particulier, le dispositif 100 peut être externe au système NMS et situé ou non dans le réseau NET, indépendamment du fait que ledit système NMS soit situé ou non dans le réseau NET.

Le dispositif 100 est configuré pour réaliser, à partir d'au moins un ensemble d'alarmes C[k] (k étant un indice entier désignant le nombre d'ensembles d'alarmes considéré), des traitements permettant notamment d'obtenir un résultat de classification pour ledit au moins un ensemble C[k], en mettant en œuvre un procédé de traitement selon l'invention.

Il est à noter que ledit au moins un ensemble C[k] peut prendre différentes formes.

Par exemple, ledit au moins un ensemble C[k] peut être constitué d'un unique ensemble d'alarmes, noté C[0], correspondant à des alarmes (par exemple la totalité des alarmes) émises dans au moins une partie du réseau NET (voire éventuellement la totalité du réseau NET, i.e. par toutes les entités E[1],...,E[6]) pendant une durée déterminée.

Alternativement, ledit au moins un ensemble d'alarmes C[k] comporte une pluralité d'ensembles d'alarmes C[1],...,C[K] (K étant un entier strictement supérieur à 1), chaque ensemble C[k] (k étant compris entre 1 et K) correspondant à un cluster ayant été généré préalablement à la mise en œuvre du procédé de traitement à partir d'un sur-ensemble d'alarmes émises dans au moins une partie du réseau NET (voire éventuellement la totalité du réseau NET, i.e. par toutes les entités E[1],...,E[6]) pendant une durée déterminée (exemple : ledit sur-ensemble correspond audit unique ensemble d'alarmes C[0] mentionné dans l'exemple précédent). Selon cette alternative, chaque cluster est associé à une cause racine qui lui est propre (i.e. à une alarme correspondant à un évènement dans le réseau NET à l'origine de l'émission des alarmes dudit cluster).

Ces aspects liés à la forme prise par ledit au moins un ensemble C[k] sont abordées de manière plus détaillée ultérieurement pour la description de modes particuliers de réalisation de l'invention.

On note par ailleurs que, indépendamment du fait que ledit au moins un ensemble C[k] comporte un ou plusieurs ensembles d'alarmes, l'invention n'est pas limitée par la durée prise en compte pour considérer des émissions d'alarmes destinées à former ledit au moins un ensemble d'alarmes C[k]. A titre d'exemple, cette durée peut être choisie de sorte à garantir un compromis entre, d'une part, une limitation des ressources de calculs et de mémoire nécessaires à la mise en œuvre de l'invention, et, d'autre part, la prise en compte d'un nombre d'alarmes suffisamment grand pour permettre de différencier les différentes pannes à l'origine desdites alarmes (exemple : durée de 24 heures).

La figure 2 représente schématiquement un exemple d'architecture matérielle du dispositif 100 de traitement de la figure 1.

Tel qu'illustré par la figure 2, le dispositif 100 dispose de l'architecture matérielle d'un ordinateur. Ainsi, le dispositif 100 comporte, notamment, un processeur 1, une mémoire vive 2, une mémoire morte 3 et une mémoire non volatile 4. Il dispose en outre de moyens de communication 5.

La mémoire morte 3 du dispositif 100 constitue un support d'enregistrement conforme à l'invention, lisible par le processeur 1 et sur lequel est enregistré un programme d'ordinateur PROG conforme à l'invention, comportant des instructions pour l'exécution d'étapes du procédé de traitement.

Le programme PROG définit des modules fonctionnels du dispositif 100, qui s'appuient ou commandent les éléments matériels 1 à 5 du dispositif 100 cités précédemment. Ces modules fonctionnels définissent notamment un modèle d'apprentissage automatique entraîné, dit « modèle IA » (et encore noté « MODEL_IA » sur les figures), et décrit plus en détails ci-après.

Les moyens de communication 5 permettent au dispositif 100 d'échanger (émission/réception) des données avec des composants matériels et/ou logiciels du système NMS ainsi qu'avec éventuellement une ou plusieurs autres entités du réseau NSM, notamment pour avoir accès (obtenir) des alarmes qui ont émises. A cet effet, ces moyens de communication 5 s'appuient sur une interface de communication, qui peut être filaire ou non filaire, utilisant tout protocole de communication connu de la personne du métier.

Comme mentionné ci-avant, la mise en œuvre du procédé de traitement s'appuie sur le modèle IA implémenté par le dispositif 100. Dans son principe général, le modèle IA est configuré pour exploiter les données d'attributs DATA_ATT[i,j] associées aux alarmes A[i] contenues dans ledit au moins un ensemble C[k]. Plus particulièrement, l'idée principale de l'invention réside dans le fait de considérer les alarmes A[i] comme des unités d'information (encore appelées « jetons » ou « tokens » selon la terminologie usuelle) entre lesquelles il est possible d'établir des corrélations au travers de l'exploitation des données d'attributs DATA_ATT[i,j] par le modèle IA.

A cet effet, le modèle IA s'inspire de modèles utilisés dans le traitement automatisé du langage naturel (« Natural Language Processing » ou « NLP » en anglais), comme typiquement le modèle BERT (acronyme de l'expression anglaise « Bidirectional Encoder Representations from Transformers »), de sorte à pouvoir créer des liens « sémantiques » entre les alarmes A[i] contenues dans ledit au moins un ensemble C[k].

Il importe de noter que le terme « sémantiques », pour ce qui concerne les liens entre alarmes A[i], dérive de la terminologie usuelle employée lors de l'utilisation de modèles NLP. En ce sens, et bien que les unités d'information que sont les alarmes A[i] ne correspondent pas à un langage parlé par des humains, elles peuvent néanmoins être vues comme des « mots » interprétés et analysés par le modèle IA pour en tirer des liens sémantiques (i.e. des corrélations). L'ensemble des mots possibles constitue un vocabulaire représentatif des alarmes A[i] pouvant être émises dans le réseau NET, et dont la richesse découle des données d'attributs DATA_ATT[i,j] qui leur sont associées.

Un autre point important à noter est que le traitement par le modèle IA des alarmes contenues dans ledit au moins un ensemble C[k] est indépendant des données temporelles éventuellement contenues dans lesdites alarmes A[i]. Dit encore autrement, la sémantique du vocabulaire formé par les alarmes A[i] ne dépend pas de l'ordre temporel selon lequel lesdites alarmes A[i] ont été émises, mais repose exclusivement sur les données d'attributs DATA_ATT[i,j]. Il s'agit là d'une différence fondamentale avec les méthodes de l'état de la technique qui, dans l'optique d'un regroupement d'alarmes en clusters, s'appuient de manière essentielle sur ce type de données temporelles pour classer les alarmes.

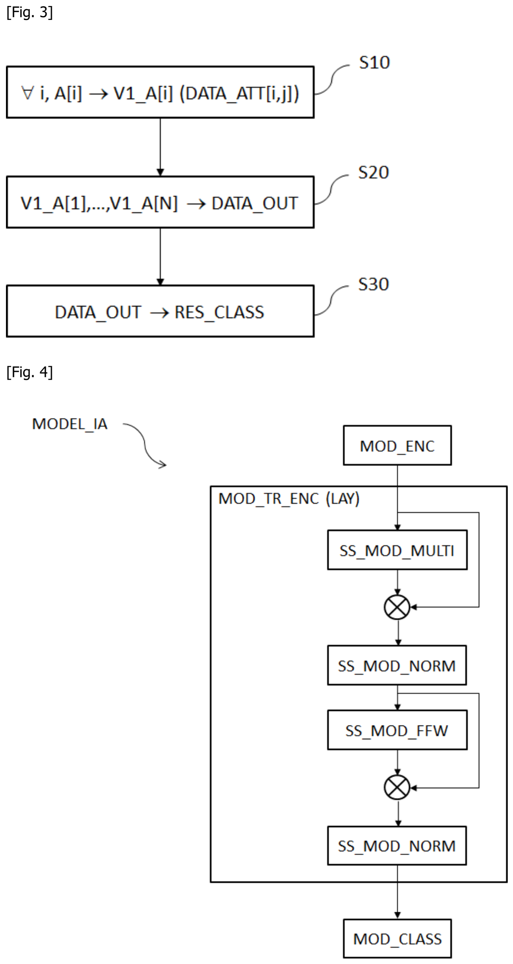

La figure 3 représente, sous forme d'ordinogramme, les principales étapes du procédé de traitement mises en œuvre par le dispositif 100 de la figure 2 pour chaque ensemble d'alarmes C[k], et plus particulièrement par le modèle IA implémenté par ledit dispositif 100. Ces principales étapes correspondent à une phase dite de « classification ».

La figure 4 représente schématiquement une configuration générale du modèle IA implémenté par le dispositif 100 pour exécuter le procédé de la figure 3.

Tel qu'illustré par la figure 3, la phase de classification associée à un ensemble C[k] comporte tout d'abord une étape S10 de détermination, pour chaque alarme A[i] dudit ensemble C[k] et par un module d'encodage MOD_ENC du modèle IA, d'une première représentation vectorielle V1_A[i] encodant ladite au moins une donnée d'attribut DATA_ATT[i,j] de ladite alarme A[i].

Ladite première représentation vectorielle V1_A[i] correspond à une représentation de l'alarme A[i] dans un espace de représentation SP_R qui est tel que chacune de ses dimensions est représentative d'une donnée d'attribut DATA_ATT[i,j]. En d'autres termes, la valeur d'une composante de ladite première représentation vectorielle V1_A[i] correspond à la proportion de la donnée d'attribut DATA_ATT[i,j] associée à cette composante dans ledit espace de représentation SP_R.

En correspondance avec ce qui a été mentionné ci-avant concernant l'analogie avec les modèles NLP, l'espace de représentation SP_R considéré ici pour les premières représentations vectorielles V1_A[i] peut alors être interprété comme un espace « sémantique » du vocabulaire formé par les alarmes A[i] lorsqu'elles sont vues comme des « mots », chacune des dimensions dudit espace de représentation SP_R correspondant à un concept sémantique dans ledit vocabulaire.

En pratique, pour réaliser l'encodage d'une alarme A[i] de l'ensemble C[k], chacune des données d'attributs DATA_ATT[i,j] est encodée dans l'espace de représentation SP_R selon la dimension qui lui correspond. La réunion de ces encodages des données d'attributs DATA_ATT[i,j] forme l'encodage de ladite alarme A[i].

A titre illustratif uniquement, on considère un exemple d'ensemble d'alarmes C[k] comportant trois alarmes A[1], A[2] et A[3].

Dans cet exemple, chaque alarme A[i] de l'ensemble C[k] comporte trois données d'attributs : DATA_ATT[i,1], DATA_ATT[i,2] et DATA_ATT[i,3]. En conséquence, l'espace de représentation SP_R possède trois dimensions ici.

Plus particulièrement, l'alarme A[1] comporte :

- une donnée d'attribut DATA_ATT[1,1] correspondant à un type d'alarme « T-ES-PCST » dont l'encodage dans l'espace de représentation SP_R fournit la valeur 42 ;
- une donnée d'attribut DATA_ATT[1,2] correspondant à un niveau de sévérité « majeure » dont l'encodage dans l'espace de représentation SP_R fournit la valeur 2 ;
- une donnée d'attribut DATA_ATT[1,3] correspondant à un type « transpondeur » de l'entité E[1] dont l'encodage dans l'espace de représentation SP_R fournit la valeur 4.

L'alarme A[2] comporte :

- une donnée d'attribut DATA_ATT[2,1] correspondant à un type d'alarme « LOS » dont l'encodage dans l'espace de représentation SP_R fournit la valeur 19 ;
- une donnée d'attribut DATA_ATT[2,2] correspondant à un niveau de sévérité « majeure » dont l'encodage dans l'espace de représentation SP_R fournit la valeur 2 ;
- une donnée d'attribut DATA_ATT[2,3] correspondant à un type « transpondeur » (ou « amplificateur », ou « multiplexeur ») de l'entité E[2] dont l'encodage dans l'espace de représentation SP_R fournit la valeur 1.

L'alarme A[3] comporte :

- une donnée d'attribut DATA_ATT[3,1] correspondant à un type d'alarme « REPLUNITMISS » dont l'encodage dans l'espace de représentation SP_R fournit la valeur 211 ;
- une donnée d'attribut DATA_ATT[3,2] correspondant à un niveau de sévérité « critique » dont l'encodage dans l'espace de représentation SP_R fournit la valeur 4 ;
- une donnée d'attribut DATA_ATT[3,3] correspondant à un type « carte programmable » de l'entité E[3] dont l'encodage dans l'espace de représentation SP_R fournit la valeur 15.

En définitive, dans cet exemple, on obtient en sortie du module d'encodage MOD_ENC du modèle IA trois premières représentations vectorielles V1_A[1], V1_A[2] et V1_A[3], où :

$$V1\_A[1] = (42, 2, 4) ;$$

$$V1\_A[2] = (19, 2, 1) ;$$

$$V1\_A[3] = (211, 4, 15).$$

Ces trois premières représentations vectorielles V1_A[1], V1_A[2] et V1_A[3] peuvent par exemple être regroupées pour correspondre respectivement aux colonnes d'une matrice. Dans cet exemple, ladite matrice est de dimension 3x3, car l'espace de représentation SP_R est de dimension égale à trois et que l'on considère trois alarmes A[1], A[2] et A[3]). De manière plus générale, si l'espace de représentation SP_R est de dimension égale à M et qu'on considère N alarmes A[1],...,A[N], la matrice associée à l'ensemble C[k] contenant lesdites alarmes est de dimension NxM.

Il est à noter que, dans un mode plus spécifique de mise en œuvre, les alarmes d'un ensemble C[k] ayant une même première représentation vectorielle ne sont prises en compte qu'une seule fois. En d'autres termes, une fois lesdites premières représentations vectorielles déterminées, il est possible d'envisager une étape de filtrage de ces dernières afin d'éviter les redondances.

Il convient par ailleurs de noter que le module d'encodage MOD_ENC peut éventuellement être configuré pour réaliser, en complément de l'encodage des alarmes A[i] dans l'espace de représentation SP_R et au moyen d'un sous-module approprié (non représenté sur les figures), un encodage supplémentaire des premières représentations vectorielles V1_A[i]. Cet encodage supplémentaire permet d'adapter la dimension de chacune desdites premières représentations vectorielles V1_A[i] à un format spécifique attendu en entrée d'un module de type transformeur-encodeur décrit en détails ci-après. Il s'agit là d'une opération de plongement dans un espace latent SP_L (opération encore appelée « embedding » en anglais) dont les détails d'implémentation sont connus de la personne du métier, si bien qu'ils ne sont pas décrits plus avant ici. En tout état de cause, et pour des raisons de simplification de la description, on considère désormais pour la suite que lesdites premières représentations vectorielles V1_A[i] fournies en sortie du module d'encodage MOD_ENC sont :

- lesdits plongements dans ledit espace latent SP_L si ledit encodage supplémentaire est exécuté, ou bien,
- lesdites représentations dans l'espace de représentation SP_R si ledit encodage supplémentaire n'est pas exécuté.

Par la suite, et tel qu'illustré par la figure 3, la phase de classification associée à un ensemble C[k] comporte une étape S20 de détermination, à partir des premières représentations vectorielles V1_A[i] déterminées lors de l'étape S10 et par un transformeur-encodeur MOD_TR_ENC du modèle IA, d'au moins une donnée de sortie DATA_OUT.

Les premières représentations vectorielles V1_A[i] forment ainsi une séquence fournie en entrée du transformeur-encodeur MOD_TR_ENC, l'ordre au sein de cette séquence n'ayant pas d'importance au sens de la présente invention. Par exemple, si les premières représentations vectorielles V1_A[i] sont regroupées sous la forme d'une matrice, comme décrit ci-avant, l'ordre dans lequel les colonnes de cette matrice sont prises en compte est indifférent.

Par « transformeur-encodeur », on fait référence à la seule partie dite « encodeur » d'un modèle de type transformeur, étant entendu que, de manière conventionnelle, un tel modèle de type transformeur comporte en outre une partie dite « décodeur ».

La configuration du transformeur-encodeur MOD_TR_ENC est de type connu en soi. Ainsi, sur la figure 4, une couche LAY dudit transformeur-encodeur MOD_TR_ENC est représentée, étant entendu que le nombre de couches n'est pas une limitation de l'invention.

Cette couche LAY comporte un sous-module SS_MOD_MULTI configurée pour recevoir les premières représentations vectorielles V1_A[i] et mettre en œuvre un mécanisme d'auto-attention à plusieurs têtes (« Multi-Head Attention » en anglais). De manière connue, le mécanisme d'auto-attention à plusieurs têtes permet au modèle IA d'évaluer l'importance relative des premières représentations vectorielles V1_A[i] au sein de la séquence d'entrée.

La couche LAY comporte également un sous-module SS_MOD_FFW placé après le sous-module SS_MOD_MULTI (dans l'ordre dans lequel les données sont traitées au sein du transformeur-encodeur MOD_TR_ENC) et configuré pour mettre en œuvre un réseau neuronal à retroaction (« Feed Forward Neural Network » en anglais).

Enfin, entre le sous-module SS_MOD_MULTI et sous-module SS_MOD_FFW, ainsi qu'en sortie dudit sous-module SS_MOD_FFW, la couche LAY comporte des sous-modules SS_MOD_NORM configurés pour mettre en œuvre des couches de normalisation aptes à maintenir les valeurs des données traitées dans des plages représentatives d'une distribution standard.

Ladite au moins une donnée de sortie DATA_OUT peut prendre différentes formes en fonction de la classification recherchée, comme décrits ci-après en relation avec des modes plus particuliers de réalisation. En tout état de cause, et de manière connue en soi, ladite au moins une donnée de sortie DATA_OUT correspond à au moins une représentation vectorielle contextuelle relative à la séquence d'entrée formée par les premières représentations vectorielles V1_A[i].

Le terme « contextuelle » fait ici référence au fait que les données d'attributs DATA_ATT[i,j] associées aux alarmes A[i] fournissent des informations de contexte pour déterminer s'il existe un lien entre lesdites alarmes A[i], ce qui est le cas si des alarmes sont associées à une même cause racine.

Finalement, et tel qu'illustré par la figure 3, la phase de classification associée à un ensemble C[k] comporte une étape S30 de détermination, à partir de ladite au moins une donnée de sortie DATA_OUT et par une tête de classification MOD_CLASS du modèle IA, d'un résultat de classification RES_CLASS dudit ensemble C[k].

Le résultat de classification RES_CLASS fournit une information caractérisant :

- l'aptitude à pouvoir générer des clusters valides à partir de l'ensemble C[k], dans l'hypothèse où ledit ensemble C[k] est l'ensemble C[0], ou bien
- la validité ou l'absence de validité de l'ensemble C[k] dans l'hypothèse où ledit ensemble C[k] correspond à un cluster ayant été généré préalablement à la mise en œuvre du procédé de traitement.

De surcroit, l'information fournie par un tel résultat de classification RES_CLASS est avantageuse en ce qu'elle permet d'envisager la mise en œuvre de traitements subséquents des alarmes pour garantir l'obtention de clusters valides, que ces derniers aient été prédéterminés avant la mise en œuvre de la phase de classification ou non.

Pour ce faire, différentes configurations de la tête de classification MOD_CLASS peuvent être envisagées au travers de trois modes particuliers de mise en œuvre du procédé de traitement respectivement référencés mode particulier A, mode particulier B, mode particulier C, et qui vont maintenant être décrits.

Mode particulier A

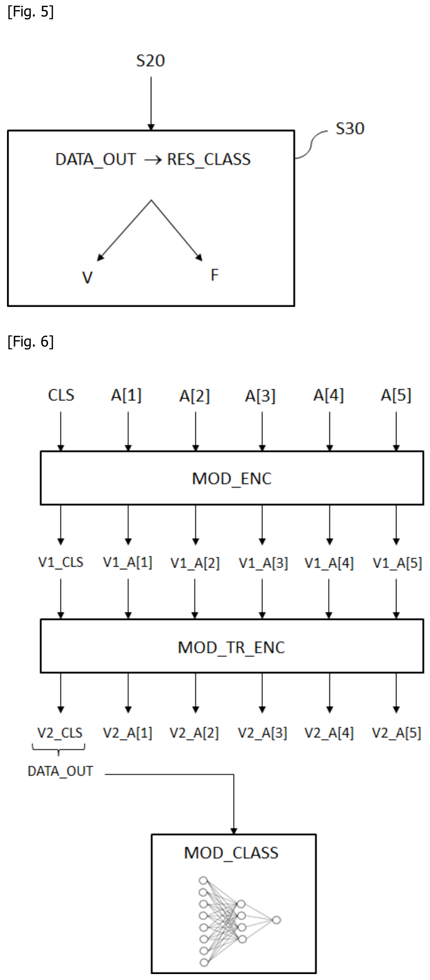

La figure 5 représente, sous forme d'ordinogramme, le mode particulier A du procédé de traitement de la figure 3.

Dans le mode particulier A, on considère que ledit au moins un ensemble d'alarmes C[k] comporte une pluralité d'ensembles d'alarmes C[1],...,C[K] (K étant un entier strictement supérieur à 1), chaque ensemble C[k] (k étant compris entre 1 et K) correspondant à un cluster ayant été généré préalablement à la mise en œuvre du procédé de traitement à partir d'un sur-ensemble d'alarmes émises dans le réseau NET pendant une durée déterminée (exemple : ledit sur-ensemble correspond audit unique ensemble d'alarmes C[0] mentionné dans ci-avant).

Par ailleurs, dans le mode particulier A, la génération des clusters C[1],...,C[K] a été effectuée de sorte que chaque cluster C[k] est associé à une cause racine qui lui est propre (i.e. à une alarme correspondant à un évènement dans le réseau NET à l'origine de l'émission des alarmes dudit cluster). Toute méthode connue de la personne du métier pour générer de cette manière lesdits clusters C[1],...,C[K] peut être envisagée, le choix d'une méthode particulière ne constituant qu'une variante d'implémentation de l'invention.

De surcroit, dans le présent mode particulier A, le résultat de classification RES_CLASS déterminé pour un cluster C[k] correspond à une indication de validité ou d'absence de validité du cluster C[k], étant entendu que, comme déjà mentionné, l'absence de validité est définie par une présence dans ledit cluster C[k] d'au moins une alarme intruse et/ou une absence dans ledit cluster C[k] d'au moins une alarme attendue.

Plus spécifiquement, dans le mode particulier A et tel qu'illustré par la figure 5, ladite indication de validité ou d'absence de validité dudit cluster est un résultat de classification binaire, pouvant par exemple prendre les valeurs « V » (pour « Vrai », ou encore « True » en anglais) ou « F » (pour « Faux », ou encore « False » en anglais) pour respectivement un cluster valide ou un cluster invalide.

Il est à noter que si un cluster C[k] est déterminé comme invalide (i.e. RES_CLASS = F), cela n'identifie pas pour autant la raison spécifique de cette absence de validité (exemple : présence d'une alarme intruse). Ces aspects correspondent à la mise en œuvre du mode particulier B, comme décrit ultérieurement.

La figure 6 représente schématiquement un exemple de configuration du modèle IA pour la mise en œuvre du mode particulier A.

Dans l'exemple de la figure 6, et à titre illustratif, on considère un cluster C[k] comportant cinq alarmes A[1],...,A[5]. Ces cinq alarmes A[1],...,A[5] sont fournies en entrée du modèle IA pour l'exécution des étapes S10, S20 et S30.

Dans cet exemple de la figure 6, outre les alarmes A[1],...,A[5], un jeton de classification « CLS » (acronyme de l'expression anglaise « Classify Token ») est également fourni en entrée du modèle IA. De manière connue en soi, ledit jeton de classification CLS est un jeton spécial utilisé dans les modèles d'apprentissage automatique, en particulier ceux basés sur une architecture de type transformeur, pour fournir une représentation de l'ensemble des autres éléments fournis en entrée du modèle IA, en l'espèce ici les alarmes A[1],...,A[5]. Ledit jeton de classification CLS peut donc être vu ici comme une alarme fictive représentative des alarmes A[1],...,A[5] est classiquement placé en premier, i.e. amont de la séquence d'alarmes A[1],...,A[5], comme illustré sur la figure 6.

Dès lors, le module d'encodage MOD_ENC détermine pour chaque alarme A[i] une première représentation vectorielle V1_A[i], mais également une première représentation vectorielle V1_CLS pour le jeton de classification CLS. Le transformeur-encodeur MOD_TR_ENC détermine quant à lui, pour chacune desdites premières représentations vectorielles V1_A[i], V1_CLS, des deuxièmes représentations vectorielles V2_A[i], V2_CLS.

Par la suite, dans l'exemple de la figure 6, ladite au moins une donnée de sortie DATA_OUT fournie en sortie du transformeur-encodeur MOD_TR_ENC est constituée de la seule deuxième représentation V2_CLS.

Cette donnée de sortie V2_CLS est fournie en entrée de la tête de classification MOD_CLASS qui, dans l'exemple de la figure 6, est un réseau neuronal de type Perceptron Multi-couche « MLP » (acronyme de l'expression anglaise « Multi-Layer Perceptron ») comportant un seul neurone de sortie correspondant au résultat de classification binaire RES_CLASS (i.e. V ou F).

Il est à noter que le fait d'utiliser un jeton de classification CLS, comme décrit en référence à la figure 6, ne constitue qu'une variante d'implémentation de l'invention, d'autres variantes pouvant être envisagées. Par exemple, une fois les deuxièmes représentations vectorielles V2_A[i] déterminées par le transformeur-encodeur MOD_TR_ENC, un regroupement desdites représentations vectorielles V2_A[i] peut être envisagé, par exemple au moyen d'une fonction de type moyennage, de sorte à générer une représentation vectorielle générale desdites représentations vectorielles V2_A[i]. Cette représentation vectorielle générale peut dès lors être fournie en entrée de la tête de classification MOD_CLASS à nouveau configurée selon un réseau neuronal de type Perceptron Multi-couche « MLP » comportant un seul neurone de sortie correspondant au résultat de classification binaire RES_CLASS (i.e. V ou F).

Pour ce qui concerne l'entrainement du modèle IA dans le cadre du mode particulier A, il peut être réalisé selon toute méthode connue de la personne du métier, le choix d'une méthode particulière ne constituant qu'une variante d'implémentation de l'invention. Par exemple, il peut s'agir d'un entrainement supervisé (i.e. utilisation d'échantillons de clusters dont on sait qu'ils sont valides ou non valides, et auxquels des étiquettes correspondantes sont attachées) couplé à une méthode d'apprentissage par langage masqué « MLM » (acronyme de l'expression anglaise « Masked Language Modeling »).

Mode particulier B

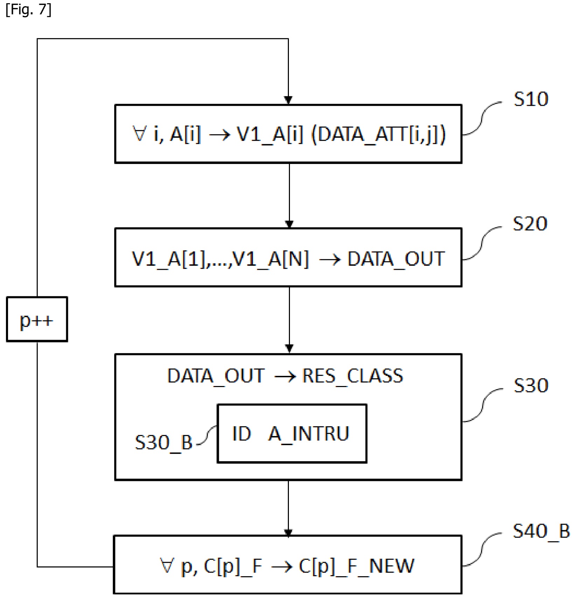

La figure 7 représente, sous forme d'ordinogramme, le mode particulier B du procédé de traitement de la figure 3.

Dans le mode particulier B, on considère que ledit au moins un ensemble d'alarmes C[k] comporte une pluralité d'ensembles d'alarmes C[1],...,C[K] (K étant un entier strictement supérieur à 1), chaque ensemble C[k] (k étant compris entre 1 et K) correspondant à un cluster ayant été généré préalablement à la mise en œuvre du procédé de traitement à partir d'un sur-ensemble d'alarmes émises dans le réseau NET pendant une durée déterminée (exemple : ledit sur-ensemble correspond audit unique ensemble d'alarmes C[0] mentionné dans ci-avant).

Par ailleurs, dans le mode particulier B, la génération des clusters C[1],...,C[K] a été effectuée de sorte que chaque cluster C[k] est associé à une cause racine qui lui est propre (i.e. à une alarme correspondant à un évènement dans le réseau NET à l'origine de l'émission des alarmes dudit cluster). Toute méthode connue de la personne du métier pour générer de cette manière lesdits clusters C[1],...,C[K] peut être envisagée, le choix d'une méthode particulière ne constituant qu'une variante d'implémentation de l'invention.

De surcroit, dans le présent mode particulier B et tel qu'illustré par la figure 7, ladite étape S30 de détermination du résultat de classification RES_CLASS comporte une sous-étape S30_B d'identification d'au moins une alarme intruse A_INTRU dans le cluster C[k] considéré lors de l'exécution de ladite étape S30.

Ainsi, le résultat de classification RES_CLASS obtenu en sortie de l'étape S30 correspond aux alarmes intruses A_INTRU identifiées, le cas échéant, dans le cluster C[k], ce qui constitue dès lors l'indication selon laquelle ledit cluster C[k] est invalide.

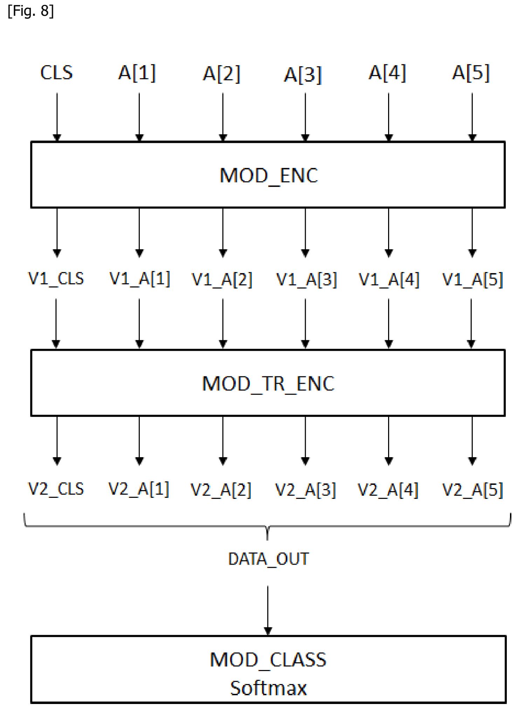

La figure 8 représente schématiquement un exemple de configuration du modèle IA pour la mise en œuvre du mode particulier B.

De manière similaire à ce qui a été décrit ci-avant pour la figure 6, l'exemple de la figure 8 est tel que :

- on considère un cluster C[k] comportant cinq alarmes A[1],...,A[5] fournies en entrée du modèle IA pour l'exécution des étapes S10, S20 et S30 ;
- un jeton de classification « CLS » est également fourni en entrée du modèle IA ;
- le module d'encodage MOD_ENC détermine pour chaque alarme A[i] une première représentation vectorielle V1_A[i], mais également une première représentation vectorielle V1_CLS pour le jeton de classification CLS ;
- le transformeur-encodeur MOD_TR_ENC détermine quant à lui, pour chacune desdites premières représentations vectorielles V1_A[i], V1_CLS, des deuxièmes représentations vectorielles V2_A[i], V2_CLS.

Par la suite, dans l'exemple de la figure 8, ladite au moins une donnée de sortie DATA_OUT fournie en sortie du transformeur-encodeur MOD_TR_ENC correspond auxdites deuxièmes représentations vectorielles V2_A[i], V2_CLS.

Cette donnée de sortie DATA_OUT est fournie en entrée de la tête de classification MOD_CLASS qui, dans l'exemple de la figure 8, est un module implémentant une fonction exponentielle normalisée (encore appelée fonction « Softmax ») de sorte à fournir une probabilité pour chacune des alarmes A[i] et pour le jeton de classification CLS. L'élément ayant la plus grande probabilité est dès lors considéré comme une alarme intruse, étant entendu que s'il n'y a pas d'alarme intruse, c'est le jeton de classification CLS qui se voit affecter de la plus grande probabilité.

Il est à noter que, suivant des considérations similaires à celles décrites ci-avant pour le mode particulier A, l'utilisation du jeton de classification CLS n'est pas obligatoire, et toute autre alternative connue de la personne du métier peut être envisagée.

Il faut par ailleurs noter que, dans l'exemple de la figure 8, une seule alarme intruse est susceptible d'être identifiée dans un cluster C[k]. Rien n'exclut cependant d'envisager des variantes dans lesquelles plusieurs alarmes intruses peuvent être identifiées. Pour ce faire, on peut envisager d'appliquer la sous-étape d'identification S30_B de manière itérative pour un même cluster C[k] en modifiant ce dernier après chaque itération pour y ex-traire l'alarme intruse identifié. Selon encore une autre alternative, on peut envisager d'entrainer la tête de classification MOD_CLASS de manière appropriée de sorte que les éventuelles alarmes intruses contenues dans un cluster C[k] aient des probabilités nettement supérieures aux autres alarmes (de sorte à en simplifier l'identification).

Pour ce qui concerne l'entrainement du modèle IA dans le cadre du mode particulier B, les considérations techniques décrites ci-avant dans le cadre du mode particulier A s'appliquent encore. De manière additionnelle, une fonction objectif (encore dite « fonction coût ») de type entropie croisée peut être utilisée pour entrainer le modèle IA à prédire la position de l'alarme ayant la plus grande probabilité parmi la séquence d'alarmes utilisée en entrée.

De manière optionnelle, et comme illustré dans la figure 7, le procédé de traitement peut encore comporter une phase dite de « correction » si plusieurs clusters ont été identifiés comme invalides (i.e. si au moins une alarme intruse a été détectée dans chacun parmi une pluralité de clusters) à l'issue des étapes S30 exécutées pour chacun des clusters C[1],...,C[K].

Pour la description de cette phase de correction, on note C[p]_F (p étant un indice entier compris entre 1 et P) un cluster identifié comme invalide parmi les clusters C[1],...,C[K].

Dès lors, ladite phase de correction comporte :

- une étape S40_B de mise à jour des clusters invalides C[1]_F,...,C[P]_F par remplacement, dans chaque cluster invalide C[p]_F, d'au moins une alarme intruse identifiée dans ledit cluster invalide C[p]_F par au moins une autre alarme intruse identifiée dans un autre cluster invalide C[p']_F (p différent de p'). Cette étape S40_B est mise en œuvre par un module de mise à jour MOD_UPD (non représenté sur les figures) équipant le dispositif 100. On note C[p]_F_NEW un tel cluster invalide mis à jour ;
- une étape d'exécution, par le modèle IA, de la phase de classification pour chacun des clusters mis à jour C[p]_F_NEW. Autrement dit, les étapes S10, S20 et S30 (et donc également la sous-étape S30_B dans le présent mode particulier B) sont exécutées pour chacun des clusters mis à jour C[p]_F_NEW.

Ladite phase de correction est itérée jusqu'à qu'un critère d'arrêt soit satisfait. Aucune limitation n'est attachée à la nature dudit critère d'arrêt. Par exemple, cela peut correspondre au fait qu'il n'y a plus de cluster invalide. Selon un autre exemple, le critère d'arrêt peut correspondre à un seuil à ne pas dépasser en termes de temps de calcul.

Mode particulier C

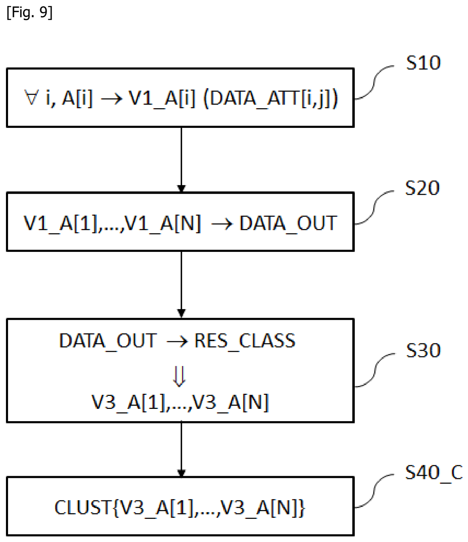

La figure 9 représente, sous forme d'ordinogramme, le mode particulier C du procédé de traitement de la figure 3.

Dans le mode particulier C, on considère que ledit au moins un ensemble d'alarmes C[k] est constitué de l'unique ensemble d'alarmes C[0] correspondant à la totalité des alarmes émises dans le réseau de communication pendant une durée déterminée.

Par ailleurs, dans le mode particulier C, et de manière similaire à ce qui a été décrit ci-avant pour le mode particulier B, ladite au moins une donnée de sortie DATA_OUT du transformeur-encodeur MOD_TR_ENC comporte, pour chaque première représentation vectorielle V1_A[i] d'une alarme A[i], une deuxième représentation vectorielle V2_A[i]. Il est à noter que la mise en œuvre du mode particulier C ne fait pas usage d'un jeton de classification CLS.

De surcroit, dans le mode particulier C, le modèle IA a été entrainé au moyen d'une technique d'apprentissage contrastif (« Contrastive Learning » en anglais) de sorte que le résultat de classification RES_CLASS comporte, pour chaque deuxième représentation vectorielle V2_A[i], une troisième représentation vectorielle V3_A[i].

Du fait de l'entrainement réalisé au moyen d'une technique d'apprentissage contrastif, lesdites troisièmes représentations vectorielles V3_A[i] sont représentatives d'une similarité (corrélation) des alarmes A[i] dudit unique ensemble d'alarmes C[0] dans l'espace de représentation SP_R (ou l'espace latent SP_L dans le cas où un encodage supplémentaire de type « embedding » est exécuté) associé auxdites premières représentations vectorielles V1_A[i].

De manière conventionnelle, l'apprentissage contrastif permet d'entrainer le modèle IA de sorte que des paires d'alarmes dites « positives » (i.e. des alarmes corrélées dans l'espace de représentation SP_R, ou l'espace latent SP_L dans le cas où un encodage supplémentaire de type « embedding » est exécuté) soit proches dans un espace de projection P_PROJ (la notion de « proximité » étant définie au moyen d'une distance dans ledit espace de projection P_PROJ, par exemple une distance euclidienne). A l'inverse, des paires d'alarmes dites « négatives » (i.e. des alarmes dont les corrélations sont faibles dans l'espace de représentation SP_R, ou l'espace latent SP_L dans le cas où un encodage supplémentaire de type « embedding » est exécuté) sont éloignées dans l'espace de projection P_PROJ.

La similarité (corrélation) entre les alarmes A[i] dans l'espace de représentation SP_R (ou dans l'espace latent SP_L dans le cas où un encodage supplémentaire de type « embedding » est exécuté) se transpose donc également dans l'espace de projection P_PROJ par projection desdites troisièmes représentations vectorielles V3_A[i]. La personne du métier sait choisir une dimension appropriée de l'espace de projection P_PROJ. De manière générale, les aspects techniques relatifs à l'implémentation des entrainements par apprentissage contrastif sont bien connus de la personne du métier, et ne sont par conséquent pas davantage détaillés ici.

De manière optionnelle, et comme illustré dans la figure 9, le procédé de traitement comporte en outre une étape S40_C de regroupement des alarmes dudit unique ensemble d'alarmes C[0] dans des clusters à partir desdites troisièmes représentations vectorielles V3_A[i]. Cette étape S40_C est mise en œuvre par un module de regroupement MOD_CLUST (non représenté sur les figures) équipant le dispositif 100.

Ladite étape S40_C peut être mise en œuvre selon toute technique de regroupement connue de la personne du métier, notamment toute technique de regroupement non supervisée. Par exemple, il peut s'agir d'une technique de k-moyennes (« k-means » en anglais) ou bien d'une technique DBSCAN (acronyme de l'expression anglaise « Density-Based Spatial Clustering of Applications with Noise »).

A la différence des méthodes de clustering de l'état de la technique, le mode particulier C permet de tenir compte des liens sémantiques entre les alarmes A[i] dans l'espace de représentation SP_R (ou dans l'espace latent SP_L dans le cas où un encodage supplémentaire de type « embedding » est exécuté), ces liens sémantiques reposant exclusivement sur les données d'attributs DATA_ATT[i,j] (et non pas sur des données temporelles). Cette manière de procéder est avantageuse car elle facilite le rapprochement (respectivement l'éloignement) des alarmes sémantiquement proches (respectivement sémantiquement éloignées), ce qui permet avantageusement de faciliter la détermination de clusters valides.

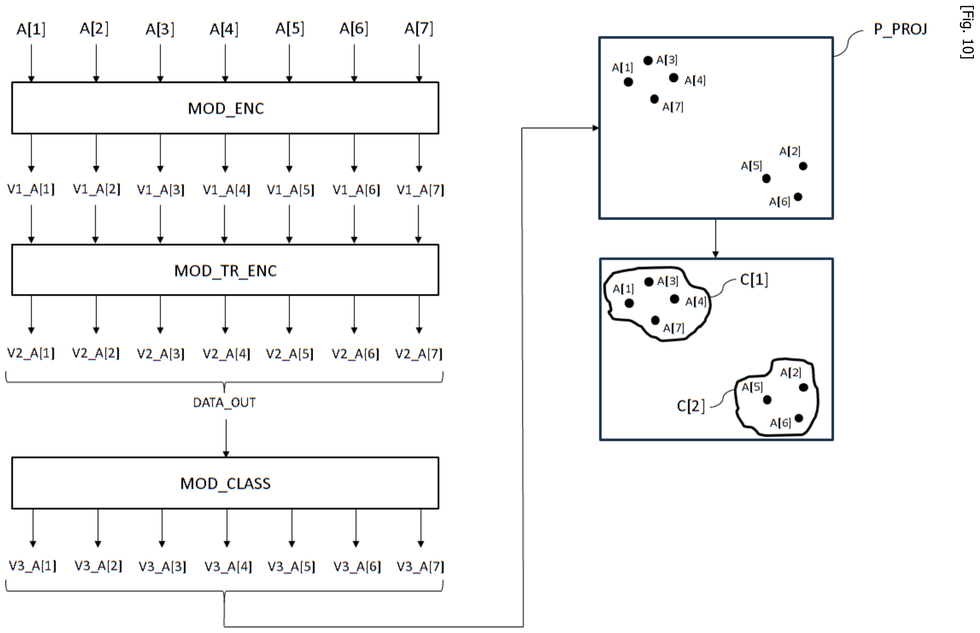

La figure 10 illustre de manière schématique un exemple de regroupement de sept alarmes A[1],...,A[7] au moyen du mode particulier C. Dans l'exemple de la figure 10, et dans le seul but d'en simplifier la représentation visuelle, on considère que les deuxièmes représentations vectorielles V2_A[1],...,V2_A[7] sont projetées dans un espace de projection P_PROJ bi-dimensionnel (i.e. un plan).

Les troisièmes représentations vectorielles V3_A[1],...,V3_A[7] qui en résultent sont représentées dans le plan P au moyen des références A[1],...,A[7] auxquelles elles sont respectivement associées, là encore pour des raisons de simplification visuelle.

Comme cela ressort de la figure 10, les alarmes A[1], A[3], A[4] et A[7] forment un premier groupe d'alarmes proches les unes des autres. En outre, les alarmes A[2], A[5] et A[6] forme un deuxième groupe d'alarmes proches les unes des autres, étant entendu que les premier et deuxième groupe sont éloignés l'un de l'autre.

En outre, dans cet exemple de la figure 10, une technique de k-moyennes est appliquée pour formellement générer deux clusters C[1] et C[2] respectivement associés auxdits premiers et deuxième groupes d'alarmes. Les causes racines respectivement associées auxdits clusters C[1] et C[2] sont distinctes.

L'invention a été décrite jusqu'à présent en considérant, via les modes particuliers B et C, la génération de clusters valides (le mode particulier A étant quant à lui consacré à la détermination du statut « valide » ou « non valide » des clusters). Toutefois, l'invention couvre encore des modes de réalisation dans lesquels, une fois des clusters valides générés (indépendamment du mode particulier B ou C utilisé), il est mis en œuvre, pour chacun desdits clusters valides générés, une étape de détermination de la cause racine associée audit cluster valide. Une telle étape de détermination de cause racine peut être mise en œuvre selon toute méthode connue de la personne du métier.

**Revendications**

1. Procédé de traitement d'au moins un ensemble d'alarmes émises dans un réseau de communication, chaque alarme comportant au moins une donnée d'attribut distincte d'une donnée temporelle, ledit procédé comportant, pour chaque ensemble d'alarmes, une phase dite de « classification » comprenant des étapes mises en œuvre par un modèle d'apprentissage automatique entrainé, dit « modèle IA », dont :

   - détermination (S10), pour chaque alarme dudit au moins un ensemble d'alarmes, et par un module d'encodage du modèle IA, d'une première représentation vectorielle encodant ladite au moins une donnée d'attribut, de manière à obtenir un ensemble de premières représentations vectorielles
   - détermination (S20), à partir dudit ensemble de premières représentations vectorielles et par un transformeur-encodeur du modèle IA, d'au moins une deuxième représentation vectorielle pour chaque première représentation vectorielle ,
   - détermination (S30), à partir de ladite au moins une deuxième représentation vectorielle et par une tête de classification du modèle IA, d'un résultat de classification dudit ensemble d'alarmes.

2. Procédé selon la revendication 1, dans lequel ladite au moins une donnée d'attribut comporte une ou plusieurs données d'attributs parmi :

   - un type de l'alarme,
   - un indicateur représentatif d'un niveau de sévérité de l'alarme,
   - un type d'une entité réseau de communication ayant émis l'alarme,
   - un identifiant d'une entité du réseau de communication ayant émis l'alarme,
   - un indicateur représentatif de la couche réseau à partir de laquelle l'alarme a été émise.

3. Procédé selon l'une quelconque des revendications 1 à 2, dans lequel :

   - ledit au moins un ensemble d'alarmes comporte une pluralité d'ensembles d'alarmes, chaque ensemble d'alarmes correspondant à un cluster ayant été généré préalablement à la mise en œuvre du procédé à partir d'un surensemble d'alarmes émises dans au moins une partie du réseau de communication pendant une durée déterminée, et chaque cluster étant associé à une alarme correspondant à un évènement dans le réseau de communication à l'origine de l'émission des alarmes dudit cluster, et
   - le résultat de classification correspond à une indication de validité ou d'absence de validité dudit cluster, laquelle est déterminée par la mise en œuvre de la phase de classification pour chaque cluster, l'absence de validité étant définie par une présence dans ledit cluster d'au moins une alarme intruse, et/ou une absence dans ledit cluster d'au moins une alarme attendue.

4. Procédé selon la revendication 3, dans lequel ladite indication de validité ou d'absence de validité dudit cluster est un résultat de classification binaire.

5. Procédé selon la revendication 3, dans lequel la détermination du résultat de classification (S30_B) comporte une identification d'au moins une alarme intruse dans ledit cluster.

6. Procédé selon la revendication 5, ledit procédé comportant en outre, si au moins une alarme intruse a été détectée dans chacun parmi une pluralité de clusters, une phase dite de « correction » comprenant des étapes de :

   - mise à jour (S40_B) des clusters invalides par remplacement, dans chaque cluster invalide, d'au moins une alarme intruse identifiée dans ledit cluster invalide par au moins une autre alarme intruse identifiée dans un autre cluster invalide,
   - exécution, par le modèle IA, de la phase de classification pour chacun des clusters mis à jour,

   ladite phase de correction étant itérée jusqu'à qu'un critère d'arrêt soit satisfait.

7. Procédé selon l'une quelconque des revendications 3 à 6, dans lequel le modèle IA a été entrainé au moyen d'une technique d'apprentissage par langage masqué.

8. Procédé selon l'une quelconque des revendications 1 à 2, dans lequel :

   - ledit au moins un ensemble d'alarmes est constitué d'un unique ensemble d'alarmes correspondant à des alarmes émises dans au moins une partie du réseau de communication pendant une durée déterminée,
   - ladite au moins une donnée de sortie du transformateur-encodeur comporte, pour chaque première représentation vectorielle, une deuxième représentation vectorielle contextualisée, et
   - le modèle IA a été entrainé au moyen d'une technique d'apprentissage contrastif de sorte que le résultat de classification comporte, pour chaque deuxième représentation vectorielle, une troisième représentation vectorielle, lesdites troisièmes représentations vectorielles étant représentatives d'une similarité des alarmes dudit unique ensemble d'alarmes.

9. Procédé selon la revendication 8, ledit procédé comportant en outre une étape de regroupement (S40_C) des alarmes dudit unique ensemble d'alarmes dans des clusters à partir desdites troisièmes représentations vectorielles.

10. Procédé selon la revendication 6 ou la revendication 7 dans sa dépendance à la revendication 6 ou la revendication 9, ledit procédé comportant en outre :

    - lorsque le procédé est conforme à la revendication 6 ou à la revendication 7 dans sa dépendance à la revendication 6, une fois la phase de correction achevée et pour chaque cluster mis à jour, une étape de détermination d'une alarme appartenant audit cluster et correspondant à un évènement dans le réseau de communication à l'origine de l'émission des autres alarmes dudit cluster ; ou
    - lorsque le procédé est conforme à la revendication 9, une fois l'étape de regroupement achevée et pour chaque cluster, une étape de détermination d'une alarme correspondant à un évènement dans le réseau de communication à l'origine de l'émission des alarmes dudit cluster.

11. Procédé selon l'une quelconque des revendications 1 à 10, dans lequel le réseau de communication est un réseau de communication optique ou un réseau de type CAN déployé dans un véhicule de transport.

12. Programme d'ordinateur comportant des instructions pour la mise en œuvre d'un procédé de traitement selon l'une quelconque des revendications 1 à 11 lorsque ledit programme est exécuté par un ordinateur.

13. Support d'enregistrement lisible par un ordinateur sur lequel est enregistré un programme d'ordinateur selon la revendication 12.

14. Dispositif de traitement d'au moins un ensemble de messages d'alarme émis dans un réseau de communication, dit « ensemble d'alarmes », chaque message d'alarme comportant au moins une information caractéristique de l'alarme associée audit message d'alarme, ledit dispositif de traitement comportant des moyens configurés pour mettre en œuvre un procédé de traitement selon l'une quelconque des revendications 1 à 11.

[Fig. 1]

[Fig. 2]

[Fig. 3]

[Fig. 4]

[Fig. 5]

S20

DATA_OUT → RES_CLASS          S30

V          F

[Fig. 6]

CLS    A[1]    A[2]    A[3]    A[4]    A[5]

MOD_ENC

V1_CLS    V1_A[1]    V1_A[2]    V1_A[3]    V1_A[4]    V1_A[5]

MOD_TR_ENC

V2_CLS    V2_A[1]    V2_A[2]    V2_A[3]    V2_A[4]    V2_A[5]

DATA_OUT

MOD_CLASS

[Fig. 7]

$$\forall\, i,\ A[i] \rightarrow V1\_A[i]\ (DATA\_ATT[i,j])$$ — S10

$$V1\_A[1],...,V1\_A[N] \rightarrow DATA\_OUT$$ — S20

p++

DATA_OUT → RES_CLASS

S30_B — ID  A_INTRU — S30

$$\forall\, p,\ C[p]\_F \rightarrow C[p]\_F\_NEW$$ — S40_B

[Fig. 8]

[Fig. 9]

$$\forall\, i,\, A[i] \rightarrow V1\_A[i]\ (DATA\_ATT[i,j])$$ — S10

$$V1\_A[1],\ldots,V1\_A[N] \rightarrow DATA\_OUT$$ — S20

$$DATA\_OUT \rightarrow RES\_CLASS$$
$$\Downarrow$$
$$V3\_A[1],\ldots,V3\_A[N]$$ — S30

$$CLUST\{V3\_A[1],\ldots,V3\_A[N]\}$$ — S40_C

[Fig. 10]

EP 4 750 014 A1

Europäisches
Patentamt

European
Patent Office

Office européen
des brevets

**RAPPORT DE RECHERCHE EUROPEENNE**

Numéro de la demande

EP 25 21 6511

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SIRAJ M M ET AL: "Intelligent Clustering with PCA and Unsupervised Learning Algorithm in Intrusion Alert Correlation", INFORMATION ASSURANCE AND SECURITY, 2009. IAS '09. FIFTH INTERNATIONAL CONFERENCE ON, IEEE, PISCATAWAY, NJ, USA, 18 août 2009 (2009-08-18), pages 679-682, XP031543879, ISBN: 978-0-7695-3744-3 * abrégé * * page 679 - page 682 * ----- | 1-14 | INV. H04L41/0631 H04L41/16 H04L41/0604 |
| X | SAEED SALAH ET AL: "A model-based survey of alert correlation techniques", COMPUTER NETWORKS, vol. 57, no. 5, 1 avril 2013 (2013-04-01), pages 1289-1317, XP055110638, ISSN: 1389-1286, DOI: 10.1016/j.comnet.2012.10.022 * page 1290 * * page 1297 * * page 1301 * * page 1304 - page 1305 * * page 1307 - page 1308; figures 3,4,6 * ----- | 1-14 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Munich | 10 mars 2026 | Camba, Sonia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)